# EUROPÄISCHE PATENTANMELDUNG

(11) **EP 4 703 187 A1**
(43) Veröffentlichungstag der Anmeldung: **04.03.2026**
(21) Anmeldenummer: 25197918.3
(22) Anmeldetag: 25.08.2025
(51) Int. Cl.: B60L 53/80, B66F 3/46, B66F 7/20

(54) **STEUERVORRICHTUNG FÜR EINE HUBVORRICHTUNG**

(30) Priorität: 27.08.2024 DE 202024104836 U
(71) Anmelder: MAHA Maschinenbau Haldenwang GmbH & Co. KG, 87490 Haldenwang (DE)
(72) Erfinder: Holger, Seeliger, 87634 Günzach (DE)
(74) Vertreter: MERH-IP Matias Erny Reichl Hoffmann Patentanwälte PartG mbB

(57) **Zusammenfassung**

Die vorliegende Offenbarung betrifft eine Steuervorrichtung 1 zur Steuerung einer Hubvorrichtung 10 mit zumindest einem Hubelement 11, insbesondere eine Kraftfahrzeug-Hubvorrichtung, die Steuervorrichtung 1 umfassend eine Steuereinheit 2 und eine Kommunikationseinheit 4.

## Beschreibung

Die vorliegende Offenbarung betrifft eine Steuervorrichtung, die dazu eingerichtet ist, eine Hubvorrichtung zu steuern. Insbesondere kann die Steuervorrichtung den Ein- und Ausbau eines Energiespeichers eines Fahrzeuges, insbesondere eines elektrischen Kraftfahrzeuges, vereinfachen.

### Hintergrund der Offenbarung

Beim Ausbau einer Fahrzeugbatterie, nachfolgend auch als Energiespeicher oder Akkumulator bezeichnet, kann insbesondere in Werkstattumgebungen eine Hubvorrichtung zum Einsatz kommen, mit der das Kraftfahrzeug angehoben wird. Solche Hubvorrichtungen für Fahrzeuge und deren verschiedenen Ausgestaltungsformen sind allgemein bekannt. Beispielsweise und nicht abschließend für den Umfang der nachfolgend beschriebenen Offenbarung können Hebebühnen mit Schwenkarmen zum Anheben des Fahrzeuges genutzt werden. Zusätzlich wird für den Ausbau und den Abtransport bzw. den Transport zu der Hubvorrichtung auch eine Ein-/Ausbauhilfseinrichtung (nachfolgend auch: Batterieaufnahmeeinrichtung) genutzt. Eine solche Batterieaufnahmeeinrichtung, die als Batterieausbauwagen, Fahrwagen, Skid, kleine Arbeitsbühnen oder dgl. ausgeprägt sein kann, weist üblicherweise eine Aufnahmeoberfläche auf, auf der die (Fahrzeug-)Batterie abgelegt wird.

Nachteilig ist, dass bei einem Ablassen des Fahrzeuges die gesamte Fahrzeuglast auf der Batterieaufnahmeeinrichtung zum Einwirken kommt, so dass diese überlastet werden kann. Üblicherweise sind Batterieaufnahmeeinrichtungen lediglich auf das Gewicht der Batterie ausgelegt. Durch die gleichbleibende Verfahrgeschwindigkeit der Hebebühne beim Ablassen des Fahrzeugs ist ein Einfädeln der Fahrzeugbatterie auf die Batterieaufnahmeeinrichtung zudem nicht einfach, da keine exakte Ausrichtung zum Fahrzeug stattfindet und die Verfahrgeschwindigkeit hoch ist.

Im Hinblick auf die oben geschilderten Schwierigkeiten ist ein System entwickelt worden, dass die Batterieaufnahmeeinrichtung mit zusätzlicher Sensorik ausstattet, so dass ein Kontakt zwischen der Sensorik und dem Fahrzeug einen Steuerbefehl an die Hubvorrichtung auslösen kann. Dies wird in EP4245595A1 beschrieben.

Nachteilig ist jedoch, dass auch bei dieser Entwicklung eine Überlastungssituation nicht vollständig ausgeschlossen werden kann, wenn die Hubvorrichtung schnell auf die Sensorik auffährt. Ferner wäre es wünschenswert, zusätzliche Sensorik zu vermeiden und insbesondere die Batterieaufnahmeeinrichtung technisch nicht zu komplex werden zu lassen. Bevorzugt soll die Batterieaufnahmeeinrichtung ein manuell schiebbarer/rollbarer "Tisch" sein, der keine weitere komplexe Technik erfordert.

### Beschreibung der Offenbarung

Zur Lösung der vorstehend genannten Aufgabe ist der hier zugehörige Anspruchssatz heranzuziehen, wobei die darin enthaltenen Unteransprüche bevorzugte technische Weiterentwicklungen aufzeigen.

Gemäß einem Aspekt der vorliegenden Offenbarung wird eine Steuervorrichtung zur Steuerung einer Hubvorrichtung beschrieben.

Wie bereits oben dargelegt wurde, kann die Hubvorrichtung gemäß der vorliegenden Offenbarung jede bekannte Ausgestaltungsform von Hubvorrichtungen und insbesondere von Kraftfahrzeug-Hubvorrichtungen annehmen.

Die Hubvorrichtung weist, wie ebenfalls vorbekannt, zumindest ein Hubelement auf, mit dem ein Kraftfahrzeug angehoben werden kann. Im Fall von 2-Säulenhebebühnen sind beispielsweise zwei solche Hubelemente in Form von verschwenkbaren Tragarmen je Säule vorgesehen.

Die hier vorgestellte Steuervorrichtung umfasst beispielsweise zumindest eine Steuereinheit und eine Kommunikationseinheit.

Auch wenn dies noch weiter erläutert werden wird, soll hier bereits notiert werden, dass die Steuervorrichtung auf verschiedene Art und Weise realisiert sein kann. So kann die Steuervorrichtung eine entsprechend eingerichtete Hardware und/oder Software sein, die in/an der Hubvorrichtung verbaut oder installiert ist. Dies kann derart umgesetzt sein, dass eine zusätzliche Steuervorrichtung in Form eines separaten Moduls an der Hubvorrichtung verbaut wird. Dies kann auch dadurch realisiert sein, dass die Steuervorrichtung als externer Steuercomputer vorgesehen ist, der mit der Hubvorrichtung kommunikativ verbunden ist. Auch kann die Umsetzung darüber erfolgen, dass die hier beschriebene Steuervorrichtung in Form von Hardware und/oder Software zusätzlich zu einer bereits bestehenden Steuervorrichtung der Hubvorrichtung hinzugefügt wird, insbesondere ist die besonders wenig komplex, wenn die hier beschriebene Steuervorrichtung/Steuereinheit als Softwarecomputerprogrammprodukt umgesetzt ist und lediglich zusätzlich in einer bestehenden Steuervorrichtung installiert werden muss. Weitere Umsetzungsformen, auch wenn hier nicht explizit erwähnt, sollen selbstverständlich auch Teil dieser Offenbarung sein, soweit für die Fachperson offensichtlich.

Die Steuereinheit kann, wie oben beschrieben, eine CPU, ein ASIC, ein Softwareprodukt oder dgl. sein. Die Kommunikationseinheit kann ebenfalls Hardware und/oder Software sein und im Basisfall eine Schnittstelle zum Austausch von Daten sein. Insbesondere kann dies zum Empfang von Daten sein, die die Hubvorrichtung liefert, bspw. in Form von noch näher zu beschreibenden Arbeitsdaten. Ferner kann diese auch dazu eingerichtet sein, Steuersignale von der Steuereinheit an die Hubvorrichtung zu übermitteln. Im Falle einer komplexeren Ausgestaltung kann die Kommunikationseinheit auch Untereinheiten oder dgl. umfassen, um bevorzugt eine funkbasierte/kabellose oder leitungsgebundene Kommunikation zu betreiben.

Ferner ist die Kommunikationseinheit dazu eingerichtet ist, Arbeitsdaten der Hubvorrichtung zu empfangen. Diese Arbeitsdaten umfassen zumindest eine Traglast L(t) der Hubvorrichtung und/oder eine Hubhöhe H(t) der Hubvorrichtung zu einem Zeitpunkt t. Hier ist festzustellen, dass die Traglast L(t) und/oder die Hubhöhe H(t) auf diversen Wegen ermittelt werden können. Beispielsweise kann die Hubvorrichtung geeignete und bereits bekannte Mittel/Einheiten dazu aufweisen, wie Lastsensoren, Einheiten, die Last oder Höhe aus anderen Daten, wie Motormomente, etc., ermitteln und dgl. Die Arbeitsdaten werden bevorzugt periodisch erfasst und an die Kommunikationseinheit übermittelt, so dass zu regelmäßigen oder unregelmäßigen und bevorzugt in kurzen Zeitabständen frische, d.h. aktuelle, Arbeitsdaten von der Kommunikationseinheit empfangen werden. Dies wird durch "t" ausgedrückt und besonders bevorzugt kann die Steuervorrichtung einen Datenspeicher aufweisen oder mit diesem verbunden sein, so dass auch mehrere Arbeitsdatenwerte verschiedener Zeitpunkte gespeichert werden können, bspw. zu Zeitpunkten t1, t2, t3, etc oder t-n, ...t-1, t. Letzteres ist insbesondere hilfreich, wenn eine zeitliche Ableitung von Arbeitsdaten erfolgen soll bzw. eine Entwicklung über einen Zeitraum beobachtet werden soll.

Auch soll hier bereits dargelegt werden, dass die ermittelte/empfangene Traglast L(t) entweder die Traglast eines einzelnen Hubelementes von einer Vielzahl vorhandener Hubelemente einer Hubvorrichtung darstellen kann oder, besonders bevorzugt, soll die Traglast L(t) hier die Gesamtlast darstellen, die von der Hubvorrichtung angehoben wird und unabhängig von der Anzahl der vorhandenen Hubelemente (d.h. in diesem Fall, dass die Summe der Teillasten jedes Hubelementes die Traglast L(t) ergibt).

Die Steuereinheit ist dazu eingerichtet, basierend auf den empfangenen Arbeitsdaten eine Verfahrgeschwindigkeit v(t) des zumindest einen Hubelementes der Hubvorrichtung zu ändern (mittels Steuersignalen), wobei bevorzugt bei mehreren Hubelementen die Verfahrgeschwindigkeit für alle Hubelemente auf identische Werte geregelt wird, um einen Gleichlauf sicherzustellen.

Ziel der Anwendung ist es, einen Energiespeicher, d.h. bevorzugt eine Fahrzeugbatterie, ohne größeren zusätzlichen Aufwand an Technik und Arbeitsschritten fachgerecht und ohne Risiken aus dem Fahrzeug zu demontieren bzw. wieder einzusetzen. Um dabei oben stehende Probleme zu vermeiden, wäre es hilfreich, wenn es einen vordefinierten Ein-/Ausbaupunkt (Hubhöhe) gäbe, welcher automatisch und exakt von der Hebebühne angefahren werden kann. Das exakte Erreichen des Ein- und Ausbaupunkts kann über eine Überwachung des auf die Hebebühne wirkenden Fahrzeuggewichts oder der Hubhöhe gesteuert werden, was gemäß dem oben dargelegten Aspekt in von den Arbeitsdaten umfasst ist. Mit anderen Worten erlaubt die oben dargelegte Konfiguration einer Steuervorrichtung, dass mittels der Arbeitsdaten ein Punkt bzw. mehrere Punkte automatisiert erkannt werden, die eine Änderung der Verfahrgeschwindigkeit automatisiert triggern, d.h. eine entsprechende Ansteuerung durch die Steuervorrichtung anstoßen. Falls ein einzelner Punkt vorgesehen ist, wäre die Änderung der Verfahrgeschwindigkeit ein auf "null stellen", da der Ausbau-/Einbaupunkt mit diesem einzelnen Punkt definiert wäre. Wenn mehrere Punkte definiert sind, so könnte diese genutzt werden, um bspw. ein Verlangsamen der Verfahrgeschwindigkeit des/der Hubelement/e auszulösen und schließlich an einem Endpunkt das Stoppen erfolgt. Das Erkennen dieses Punktes oder dieser Punkte kann offenbarungsgemäß auf verschiedene Art und Weise erfolgen und diese Optionen können auch kombiniert werden. Dies wird in bevorzugten Aspekten nachfolgend näher erläutert:

Optional kann die Steuereinheit dazu eingerichtet sein, unterschiedliche Arbeitsmodi auszuführen, bspw. über entsprechende Softwaremodi, und zumindest ein Arbeitsmodus kann für das Ausbauen eines Energiespeichers aus einem batterieelektrischen Kraftfahrzeug und ein Arbeitsmodus kann für das Einbauen eines Energiespeichers aus einem batterieelektrischen Kraftfahrzeug vorgesehen sein. Selbstverständlich können auch weitere Arbeitsmodi oder nur einer der genannten vorgesehen sein. Die Arbeitsmodi können auf unterschiedliche Weise und wie vorbekannt ausgewählt werden, besonders bevorzugt erfolgt dies durch einen Nutzer der Hubvorrichtung. Es können jedoch auch automatische Auswahloptionen vorgesehen sein, bspw. wenn die Steuervorrichtung erkennt, dass ein Kraftfahrzeug leichter ist als vorgesehen, könnte automatisch erkannt werden, dass ein Einbaumodus zu aktivieren ist, oder falls das Fahrzeug das spezifikationstypische Gewicht aufweist, so könnte ein Ausbau-Arbeitsmodus automatisch gewählt werden.

Optional kann die Steuereinheit dazu eingerichtet sein, bei einem Ausbau eines Energiespeichers das von der Hubvorrichtung angehobene Kraftfahrzeug basierend auf den empfangenen Arbeitsdaten der Hubvorrichtung auf eine Höhe abzusenken, die der Höhe einer Batterieaufnahmeeinrichtung entspricht. Dazu wurde die Batterieaufnahmeeinrichtung zuvor, d.h. im angehobenen Zustand unterhalb des Kraftfahrzeuges platziert, um danach das Fahrzeug auf die oben genannte Höhe abzusenken, so dass nach Erreichen dieser Höhe der Energiespeicher oder einzelne Komponenten/Zellen ausgebaut werden können und auf einer Aufnahmeoberfläche der Batterieaufnahmeeinrichtung abgelegt werden können (danach kann das Fahrzeug wieder angehoben und die Batterieaufnahmeeinrichtung weggefahren werden, falls notwendig). Die Höhe mittels der Arbeitsdaten der Hubvorrichtung zu ermitteln, erlaubt es, dass die Batterieaufnahmeeinrichtung keinerlei technische Zusatzmittel erfordert und auch die Hubvorrichtung muss meist keine zusätzliche Installationen erhalten, da Hubhöhenmessung und Traglastmessung nicht selten bereits in Hubvorrichtungen vorinstalliert sind.

Optional kann die Steuereinheit dazu eingerichtet sein, insbesondere bei einem Ausbau eines Energiespeichers basierend auf den empfangenen Daten zu der Traglast L(t) des zumindest einen Hubelementes die Verfahrgeschwindigkeit v(t) auf null zu setzen, wenn der Wert L(t) während eines Absenkens sinkt oder dieser startet zu sinken, beides kann bspw. anhand von einem Vergleich zu einem vorherigen Zeitpunkt gemessener Werte L(t-1, t-2, etc.) festgestellt werden oder anhand der zeitlichen Ableitung mehrerer Werte von L zu verschiedenen Zeitpunkten t-n, ..., t-1, t. Im Hinblick auf den Wert L(t) ist zudem zu notieren, dass dieser ein Einzelwertes eines Hubelementes, falls mehrere vorhanden sind, sein kann oder besonders bevorzugt wird für L(t) die Summe der Teillastwerte aller Hubelemente aufaddiert herangezogen. Falls hingegen nur ein Hubelement vorgesehen sein sollte, wäre L(t) bevorzugt die Last dieses Hubelementes.

Im Hinblick auf die Werte L zu verschiedenen Zeitpunkten t-n, t, etc. ist zudem festzuhalten, dass diese in einem Datenspeicher der Steuervorrichtung, der Hubvorrichtung, einer allgemeinen Steuerung der Hubvorrichtung und/oder auf einem fernangeordneten Computer oder Server (remote) zwischengespeichert werden können. Hier können auch andere Werte, wie noch unten beschriebene Referenzwerte etc. abgelegt werden oder vorabgespeichert sein. Falls die Steuereinheit auch (teilweise) anhand von Software umgesetzt sein sollte, so kann der Datenspeicher für vorgespeicherter Werte, temporär zu speichernde Werte, etc., d.h. allgemein für zu speichernde Daten und insbesondere Arbeitsdaten, physisch der gleiche Speicher sein, der auch die Software der Steuereinheit speichert oder es kann sich um einen eigenen Speicher handeln. Letzteres wäre beispielsweise bevorzugt der Fall, falls ein ASIC mit integriertem Speicher für die Programmierung der Steuereinheit vorgesehen sein sollte.

Optional kann die Steuereinheit dazu eingerichtet sein, insbesondere bei einem Ausbau eines Energiespeichers basierend auf den empfangenen (Arbeit-)Daten zu der Traglast L(t) des zumindest einen Hubelementes die Verfahrgeschwindigkeit v(t) auf null zu setzen, wenn der Wert L(t) während des Absenkens des zumindest einen Hubelementes um einen Referenzwert Lref multipliziert mit einem Sicherheitsfaktor gegenüber einem Ausgangswert oder Vorwert von L(t) kleiner geworden ist.

Wie bereits oben beschrieben worden ist, kann der Referenzwert, hier Lref, vorgespeichert in einem Datenspeicher abgelegt und z.B. werksseitig festgelegt worden sein oder von einem Nutzer vor der Nutzung der Hubvorrichtung. Der Referenzwert Lref, wie noch unten beschrieben, kann bevorzugt das Gewicht des Energiespeichers wiedergeben und zwar besonders bevorzugt abhängig von dem anzuhebenden Fahrzeugmodell bzw. dessen Ausführungsvariante. Besonders bevorzugt wird der Sicherheitsfaktor noch hinzugezogen, der zwischen 0% und 100% liegen kann, so dass genau eingestellt sein kann, wie sensitiv das Aufnullsetzen getriggert wird. Bevorzugt sind hier Werte von 10-40%, wobei dies auch abweichend sein kann.

"Kleiner geworden" bedeutet hier bevorzugt, dass während des Verfahrens der Hubvorrichtung bzw. dessen Hubelemente(s) laufend und periodisch der Wert von L(t) bestimmt wird und, wie oben beschrieben, eine Veränderung bspw. über Vergleiche detektiert werden kann. Selbstverständlich können hier auch Durchschnittswerte oder mehrmalige Referenzwertverletzungen als Voraussetzung für eine Ansteuerung gefordert werden, um beispielsweise ein einmaliges Unterschreiten der Referenzhöhe oder der Referenztraglast, vielleicht auch durch Messungenauigkeiten ausgelöst, nicht sofort zu einem Steuersignal führen zu lassen.

Eine solche gewichtsabhängige Detektion ermöglicht es, sehr genau festzustellen, wann das Kraftfahrzeug beim Absenken aus einer angehobenen Position heraus beginnt mit der Batterieaufnahmeeinrichtung in Kontakt zu treten, was den Ein-/Ausbaupunkt anzeigt. Insbesondere kann hierbei auch vermieden werden, dass die Batterieaufnahmeeinrichtung mit zu hohem Gewicht, d.h. oberhalb der Batteriegewichtslast, auf die diese üblicherweise ausgelegt sind, belastet wird.

Im Hinblick darauf, dass oben geschilderte Konfiguration bzw. auch die nachfolgenden Konfigurationen, die insbesondere für einen Ausbau eines Energiespeichers vorgesehen sein sollen, soll bemerkt werden, dass dies lediglich als bevorzugtes Beispiel zu verstehen ist und ganz besonders bevorzugt dies in einem entsprechenden Arbeitsmodus/Programmmodus der Steuervorrichtung erfolgen kann, der bspw. vom Nutzer ausgewählt werden kann.

Optional kann die Steuereinheit dazu eingerichtet sein, insbesondere bei einem Ausbau eines Energiespeichers, basierend auf den empfangenen Daten zu der Hubhöhe H(t) des zumindest einen Hubelementes die Verfahrgeschwindigkeit v(t) auf null zu setzen, wenn der Wert H(t) während eines Absenkens des zumindest einen Hubelementes auf einen Referenzwert Href,Ende abgesunken ist. Hier ist Href,Ende ein in einem Datenspeicher vorgespeicherter Referenzwert für die Ein-/Ausbauposition des Energiespeichers und bevorzugt werden hierfür verschiedene Werte im Datenspeicher vorgespeichert/vorab abgelegt, die jeweils für eine Batterieaufnahmeeinrichtung vorgesehen sind. Der richtige Referenzwert kann, wie auch bei allen anderen hier beschriebenen Referenzwerten, automatisiert ausgewählt werden können, bspw. über eine automatische Fahrzeug- oder Batterieaufnahmeeinrichtungserkennung, oder durch einen Nutzer ausgewählt oder, falls kein Wert vorbestimmt/vorgespeichert vorliegt, eingestellt werden. Hier wird technisch wenig aufwendig der üblicherweise sowieso von der Hubvorrichtung erfasste und damit bekannte Hubhöhenwert zur Detektion der Ein-/Ausbauposition herangezogen. Bei mehreren Hubelementen ist bevorzugt davon auszugehen, dass diese alle die gleiche Hubhöhe aufweisen.

Um den Übergang des Stoppens der Verfahrbewegung der Hubvorrichtung bzw. dessen Hubelemente mit einem Geschwindigkeitsübergang zu gestalten und so ein zu schnelles Anfahren der Ein-/Ausbauposition technisch vorteilhaft zu verhindern, kann weiter optional die Steuereinheit basierend auf den empfangenen Daten zu der Hubhöhe H(t) des zumindest einen Hubelementes die Verfahrgeschwindigkeit v(t) gemäß einem vorgespeicherten Geschwindigkeitsprofiles, auch dieses kann in einem Datenspeicher vorbestimmt sein oder von einem Nutzer vor der Anwendung der Hubvorrichtung eingestellt werden, verändern. Diese Veränderung kann bspw. derart ausgestaltet sein, dass wenn der Wert H(t) während eines Absenkens des zumindest einen Hubelementes auf einen Referenzwert Href,1 abgesunken ist, eine Verlangsamung der Verfahrgeschwindigkeit vorgenommen wird. Weitere Referenzwerte Href,2,3,...,n können zum Abfahren detaillierterer Geschwindigkeitsprofile genutzt werden. Das endgültige Stoppen kann dann weiterhin bei Href,Ende erfolgen. Die Referenzwerte Href,1..n liegen bevorzugt oberhalb des Href,Ende, wobei das Maß von wenigen Zentimetern bis hin zu mehreren Dezimetern gewählt sein kann. Ausgeschlossen ist selbstverständlich nicht, dass diese noch weiter oberhalb von Href,Ende eingestellt sind.

Besonders bevorzugt kann die Steuereinheit dazu eingerichtet sein, basierend auf den empfangenen Daten zu der Hubhöhe H(t) und der Traglast L(t) des zumindest einen Hubelementes die Verfahrgeschwindigkeit v(t) auf null zu setzen, wenn der Wert H(t) während eines Absenkens des zumindest einen Hubelementes auf einen Referenzwert Href,Ende abgesunken ist und/oder der Wert L(t) beginnt zu sinken (oder um einen Wert Lref*Sicherheitsfaktor) gegenüber einem Ausgangswert oder einem zuvor gemessenen Wert L bei t-1 kleiner geworden ist. Hier wird folglich eine Kombination der Arbeitsdaten Hubhöhe und Traglast genutzt, um zusätzliche Sicherheit zu ermöglichen, da zwei unabhängige Kennwerte überwacht werden und alternativ zu einem Auslösen des Stoppens führen können. Weiterhin kann die Kombination auch dazu genutzt werden, dass bspw. bei einem Referenzwert Href,1 eine Verlangsamung der Verfahrgeschwindigkeit angesteuert wird, wobei der Referenzwert Href,1 (wie auch oben) oberhalb von Href,Ende eingestellt ist (auch kann hier wieder ein Geschwindigkeitsprofil hinterlegt sein) und erst bei Href,Ende und/oder der Traglaststoppbedingung der Stopp erfolgt. Diese Kombination erhöht sowohl die Sicherheit als auch die Genauigkeit des Anfahrens der Ein-/Ausbauposition.

Wie oben beschrieben wurde, können die Referenzwerte für die Traglast Lref und für den Sicherheitsfaktor für verschiedene Fahrzeugmodelle und Fahrzeugvarianten in einem oder mehreren Datenspeichern hinterlegt sein und bevorzugt Lref dem Gewicht eines Energiespeichers eines jeweiligen Fahrzeugmodells oder der jeweiligen Fahrzeugvariante entsprechen.

Ferner können die Werte für Href,Ende oder Href,1..n in einem oder mehreren Datenspeichern hinterlegt sein und Href,Ende der Höhe verschiedener Modelle von Batterieaufnahmeeinrichtungen entsprechen, wobei Href,1..n bevorzugt als Wert Href,Ende mit einem vorgespeicherten Höhensicherheitswert addiert hinterlegt sind.

Optional kann ein Arbeitsmodus der Steuereinheit dazu eingerichtet sein, einen möglichen Federweg einer Kraftfahrzeugfederung zu berücksichtigen, wenn das Kraftfahrzeug an dessen Federung angehoben wird. Dazu können die Höhenreferenzwerte Href,1 oder Href,Ende um einen Federwegwert modifiziert sein, um insbesondere die Veränderung der Hubhöhe bei dem durch Ein- oder Ausbau veränderten Gewicht des Kraftfahrzeuges Rechnung tragen zu können.

Optional kann die Steuereinheit in einem Arbeitsmodus für den Einbau eines Energiespeichers in ein batterieelektrisches Kraftfahrzeuges dazu eingerichtet sein, den Höhenreferenzwert Href,1 oder Href,Ende anzufahren. Dies ermöglicht eine genaues und wenig aufwendiges Anfahren der Einbauposition.

Ferner kann die Steuereinheit in einem Arbeitsmodus für den Einbau eines Energiespeichers in ein batterieelektrisches Kraftfahrzeug dazu eingerichtet sein, einen temporären Höhenreferenzwert Href,temp anzufahren, wobei der temporäre Höhenreferenzwert Href,temp bei einem zuvor erfolgten Ausbau zwischengespeichert worden ist. Dies ermöglicht es, dass nicht auf global vordefinierte Referenzwerte zurückgegriffen werden muss, sondern auf zeitlich kurz vorher exakt bestimmte Werte, so dass die Genauigkeit des Anfahrens der Einbauposition erhöht wird.

Steuervorrichtung gemäß zumindest einem der voranstehenden Ansprüche, wobei die Steuereinheit ein Computerprogrammprodukt sein kann, dass in einem Datenspeicher als Softwareprodukt hinterlegt ist. Dies wurde bereits oben auch dargelegt, dass die eine weitere Option zusätzlich zu einer Hardware- und/oder Softwareausführung darstellt.

Ferner wird hier eine Hubvorrichtung mit zumindest einem Hubelement zum Anheben eines Kraftfahrzeuges vorgestellt, die zudem zumindest eine Erfassungseinheit zum periodischen Erfassen (und Übermitteln) von Arbeitsdaten der Hubvorrichtung und einer Steuervorrichtung wie oben beschrieben aufweist.

Zusammenfassend ermöglicht die vorliegende Offenbarung, dass ein sehr genaues Anfahren der Ein-/Ausbauposition ermöglicht wird und dies unter Ausnutzung bereits bei Hubvorrichtungen vorliegender "Sensorik", so dass auch keine Erhöhung der Komplexität einer Hubvorrichtung erfolgt. Beispielsweise kann bei Erreichen des Batteriegewichtes der Absetzpunkt als erreicht detektiert worden ist, die Batterie ohne/mit geringen mechanischen Spannungen auf dem Skid aufsetzen und entfernt werden. Die Geschwindigkeit beim Anfahren kann zudem durch vorgefertigte Geschwindigkeitsrampen/-profile gesteuert werden, so dass das Ein- und Ausheben der Batterie auf die Ein-/Ausbauhilfe in einer langsameren Geschwindigkeit erfolgen kann. Die vorliegende Offenbarung kann sowohl für Fahrzeuge, die an der Karosserie gehoben werden als auch für Fahrzeuge die an gefederten Punkten (z.B. Räder) gehoben werden, genutzt werden.

### Kurzbeschreibung der Figuren

- **Figur 1:**: zeigt schematisch und beispielhaft eine Hubvorrichtung, eine Batterieaufnahmeeinrichtung und eine Steuervorrichtung wie hier offenbart.
- **Figur 2:**: zeigt schematisch und beispielhaft eine Hubvorrichtung, eine Batterieaufnahmeeinrichtung und eine Steuervorrichtung wie hier offenbart.

### Detaillierte Beschreibung der Figuren

Im Folgenden wird die vorliegende Offenbarung anhand schematischer und beispielhafter Figuren weiter beschrieben. Die Merkmale der verschiedenen Figuren sind im Ganzen oder teilweise kombinierbar und die vorliegende Offenbarung ist nicht auf die beschriebenen Beispiele und Darstellungen beschränkt, soweit für eine Fachperson ersichtlich.

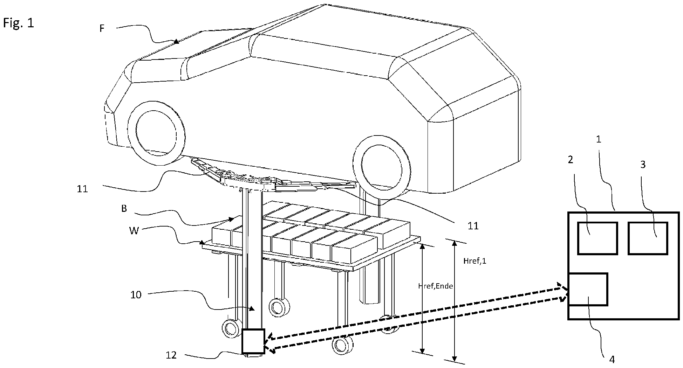

Die Figur 1 zeigt schematisch und beispielhaft eine Hubvorrichtung 10 und hier als Beispiel in Form einer 2-Säulenhebebühne mit jeweils zwei Hubelementen 11 an jeder Säule (es sind die Hubelemente 11 einer Säule zu sehen und die anderen werden durch das Fahrzeug verdeckt), eine Batterieaufnahmeeinrichtung W in einer Situation, in der der Energiespeicher (die Batterie B) auf der Batterieaufnahmeeinrichtung W abgelegt ist (hier sind auch die einzelnen Zellen der Batterie B schematisch dargestellt) und eine Steuervorrichtung 1 gemäß der Offenbarung. Messsensorik oder Erfassungsmittel für Höhe H(t) und Last L(t) sind nicht dargestellt und wie vorbekannt üblicherweise Teil der Hubvorrichtung 10 bzw. deren genereller Steuerung (nicht gezeigt).

Die Steuervorrichtung 1 steht kommunikativ und bevorzugt kabellos in einer Datenverbindung mit der Hubvorrichtung 10, was über eine schematisch dargestellte Datenschnittstelle 12 auf der Hebebühnenseite und eine Kommunikationseinheit 4 auf der Seite der Steuervorrichtung 1 eingerichtet sein kann. Selbstverständlich ist die gezeigte Anordnung der Steuervorrichtung 1 beispielhaft zu interpretieren und es ist auch möglich, dass diese direkt an der Hubvorrichtung 10 angeordnet/integriert ist, als Teil einer weiteren/generellen Steuervorrichtung der Hubvorrichtung 10 vorgesehen ist oder Teil eines remote angeordneten Computers oder Servers ist. Auch kann die Steuervorrichtung 1 als Softwareprodukt ausgestaltet sein und Teil eines Steuerprogrammproduktes.

Die Figur 1 zeigt ferner, dass die Steuervorrichtung 1 weiter zumindest eine Steuereinheit 2 aufweist und bevorzugt auch einen Datenspeicher 3 (falls dieser nicht remote angeordnet ist oder in einer anderen Speichereinheit vorgesehen sein sollte, auf die die Steuervorrichtung 1 zugreifen kann).

Die bevorzugt bidirektionale Datenverbindung ist in Figur 1 mittels eines gestrichelten Doppelpfeils aufgezeigt und über die Datenverbindung können Steuersignal, Daten, wie Arbeitsdaten, etc. ausgetauscht bzw. gesendet werden.

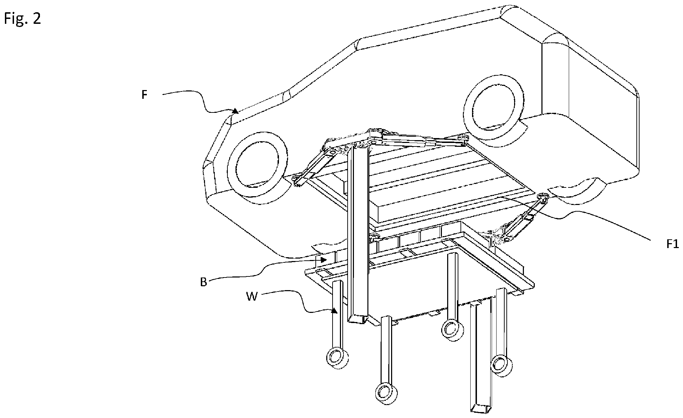

Ferner zeigt die Figur 2, die das angehobene Kraftfahrzeug F aus einer unteren Bodenperspektive zeigt, die Batterieaufnahmeeinrichtung W in Form eines hier beispielhaft gezeigten manuell verschiebbaren Wagens mit einer Aufnahmeoberfläche, auf der hier auch die Batterie B abgelegt gezeigt ist. In der Figur 2 wird zudem auch die Batteriebucht F1 des batterieelektrisch betriebenen Kraftfahrzeuges aufgezeigt, in die die Batterie B bei einem Einbau verbaut wird bzw. beim Ausbau dort herausgenommen wird. Wie gezeigt, umfasst die Batterie B regelmäßig eine Vielzahl einzelner Zellen, die entweder als Verbund oder einzeln entnommen/verbaut werden.

Figur 1 wiederrum zeigt zudem auch beispielhaft mögliche Referenzwerte, die in einem Datenspeicher, z.B. dem mit Bezugszeichen 3 gekennzeichneten, abgelegt sind, d.h. vorbestimmte oder von einem Nutzer eingegeben Werte. Hier sind beispielhaft und virtuell Referenzwerte für Href,Ende und Href,1 gezeigt, wobei Href,Ende der Höhe der Aufnahmeoberfläche der Batterieaufnahmeeinrichtung W vom Werkstatt-Boden bzw. von den Außenoberflächen der Räder der Batterieaufnahmeeinrichtung W aus gemessen entspricht. Href,1 wiederrum kann als Wert oberhalb von Href,Ende vorgesehen sein, so dass ab Erreichen dieses Wertes beim Absenken der Hubvorrichtung 10 bzw. der Hubelemente 11 eine Reduktion der Verfahrgeschwindigkeit v(t) angesteuert werden kann oder ein Geschwindigkeitsprofil abgefahren werden kann und ein vollständiger Stopp mit v(t) = 0 auf Href,Ende hin erfolgt. Bevorzugt gilt dies insbesondere bei einem negativen v(t), d.h. bei einem Verfahren in die Richtung von oben nach unten, d.h. bei einem Absenken.

Die Steuersignale kommen dann bevorzugt über die Datenverbindung von der Steuervorrichtung 1, während die Messwerte der aktuellen Höhe H(t) zu periodisch erfassten und übermittelten Zeitpunkten t-n, t-1, t, etc. von der Hubvorrichtung 10 an die Steuervorrichtung 1 übermittelt werden. Dabei sind insbesondere kurze Zeitabstände bevorzugt, um die Genauigkeit der Verfahrüberwachung hoch zu halten. Beispielsweise kann vorgesehen sein, jede Sekunde und bevorzugt deutlich häufiger, bspw. mit Intervallen von wenigen oder einer Millisekunde, zu messen und/oder zu übermitteln.

Mit anderen Worten ist Href,Ende ein festgelegter Ein-/Ausbaupunkt, der bei gleichen Fahrzeugen einer Baureihe immer gleich sein kann. Der Ein-/Ausbaupunkt ist der Punkt, an dem alle Verbindungsschrauben zwischen Fahrzeugbatterie und Fahrzeug gelöst werden bzw. gelöst sein können, sowie die Fahrzeugbatterie vollständig auf der Ausbauhilfe/ Batterieaufnahmeeinrichtung W lagert.

Wie bereits beschrieben, kann die die Festlegung des Ein-/Ausbaupunktes vorab gespeichert werden oder durch Zusatzterminals (auch z.B. Computer oder Smartphone) mit Display den jeweiligen Baureihen gespeichert und zugeordnet werden. Besonders bevorzugt fährt die Hubvorrichtung 10 (oder Hebebühne) automatisiert gesteuert von der Steuervorrichtung 1 auf den vorher bestimmten Ein-/Ausbaupunkt. Mit Hilfe weiterer Punkte, wie bspw. Href,1, kann die Verfahrgeschwindigkeit automatisch verringert werden und bei Href,Ende zum Stillstand angehalten werden. Durch eine Änderung der Geschwindigkeit und die Festlegung des Ein-/Ausbaupunktes kann die Kraftübernahme der Traglast der Batterie B genau gesteuert werden, so dass das Tragelement für die Fahrzeugbatterie (Batterieaufnahmeeinrichtung W), auf dem die Batterie später abgesetzt wird, nicht überlastet werden kann. Dies gilt auch für Hubtische, die an die Fahrzeugbatterie gefahren werden, die keine Lastüberwachung haben, so dass die Batterieaufnahmeeinrichtung W technisch keiner aufwendigen Modifikationen bedarf.

Zudem kann die Steuervorrichtung 1 mittels weiterer vorgespeicherter Werte, wie einem Referenzfederweg, auch genutzt werden, wenn das Fahrzeug F an den Rädern mit Radaufnahmen gehoben wird. In diesem Fall handelt es sich um ein gefedertes System und es wird der Federweg und die Federkraft beim Ein- und Ausbau beachtet (das Lösen der Verbindungsschrauben zwischen der schweren Fahrzeugbatterie und des Fahrzeugs bewirkt eine Aufwärtsbewegung des Fahrzeugs, nicht dargestellt) und durch die Steuervorrichtung 1 überbrückt. Beispielsweise durch eine Addition oder Subtraktion des Referenzfederwegwertes zu den Referenzhöhen, wie Href,Ende.

Weiterhin, und zwar alternativ oder zusätzlich, kann die Ansteuerung eines Ein-/Ausbaupunktes (genauer einer solchen "Höhe") auch mittels Gewichts- bzw. Traglastüberwachung an den Hubelementen 11 oder an der Hubvorrichtung 10 erfolgen. Grundsätzlich soll sich dabei offenbarungsgemäß zu Nutze gemacht werden, dass bei einem ersten Kontakt zwischen Batterieaufnahmeeinrichtung W und dem Fahrzeug F eine Reduktion der auf die Hubvorrichtung 10 bzw. dessen Hubelemente 11 gemessenen Traglast (Gewicht) erfolgt, da ein Teil des Gewichtes der Batterie B und des Fahrzeuges F (im batterieverbauten Zustand) auf die Batterieaufnahmeeinrichtung W einwirkt. Dieser Übergang der Traglastreduktion kann bei einer Überwachung der Traglast der Hubvorrichtung 10 (oder eines oder mehrerer der Hubelemente 11) mit kurzen zeitlichen Intervallen, bspw. im Millisekundenbereich, erfasst werden und zur Detektion des Ein-/Ausbaupunktes genutzt werden. Hierzu können wiederrum Referenzwerte, wie Lref oder auch Sicherheitsfaktoren, vorgespeichert sein, um eine größenmäßige Veränderung der Traglast L(t) als Detektionspunkt zu definieren. Es kann jedoch auch definiert sein, dass jedes Verändern von L(t) in Richtung einer Reduktion, d.h. negative zeitliche Ableitung, als Ein-/Ausbaupunkt anzusehen ist und dann einen Stopp der Verfahrgeschwindigkeit auslöst.

Eine Kombination aus Höhen- und Traglastreferenzwerten ermöglicht zudem weitere Erhöhung der Sicherheit und noch genaueres Anfahren des Ein-/Ausbaupunktes. Im Hinblick auf die Höhenreferenzwerte oder auch im Hinblick auf ein Feststellen einer beginnenden Reduktion der Traglast kann auch der Einbaupunkt angefahren werden, indem das ohne Batterie B angehobene Kraftfahrzeug F abgesenkt wird und zwar bis zum Start der Traglastreduktion oder bis zu einem Erreichen einer festgelegten Höhe, wie Href, Ende. Möglich ist es zudem auch, dass Href,Ende temporär und automatisch von der Steuervorrichtung 1 bei einem Ausbauvorgang zwischengespeichert worden ist, so dass beim Einbau auf diesen Wert zurückgegriffen werden kann.

Im Übrigen kann die vorliegende Offenbarung auch umfassen, dass eine oder mehrere Kameraeinheiten (nicht gezeigt) mit der Steuervorrichtung 1 und/oder der Hubvorrichtung 10 verbunden sind und dazu an der Hubvorrichtung 10 angeordnet oder auch im Boden eingelassen sein können. Die Kameraeinheit(en) können insbesondere einen Unterboden des Fahrzeuges F im Sichtfeld haben, so dass darüber auch eine vereinfachte Positionierung der Batterieaufnahmeinrichtung W erfolgen kann, ohne dass sich eine Person unter das Fahrzeug F begeben muss. Dazu kann auch beispielsweise computerunterstützt eine Positionierung erfolgen; oder es kann zumindest die Positionierung der Batterieaufnahmeinrichtung W an einem Bildschirm verfolgt werden. Letzteres wird insbesondere bevorzugt, wenn die Batterieaufnahmeinrichtung W ferngesteuert oder selbstgesteuert verfahren werden kann.

Ein Ablauf zum Einbau oder Ausbau einer Batterie B gemäß dieser Offenbarung könnte analog zu den in den Ansprüchen beschriebenen Einrichtungen/Konfigurationen der Steuervorrichtung in entsprechenden Schritten oder Schrittfolgen erfolgen.

Zusammengefasst kann die Offenbarung ein technisch weniger aufwendiges und sicheres Ein- und Ausbauen einer Batterie B aus einem Kraftfahrzeug F realisieren.
1 Steuervorrichtung
2 Steuereinheit
3 Datenspeicher(einheit)
4 Kommunikationseinheit

10 Hubvorrichtung
11 Hubelement(e)
12 Schnittstelle

F (Kraft-)Fahrzeug
F1 Batterieschacht
B Energiespeicher/Batterie
W Batterieaufnahmeeinrichtung

## Patentansprüche

1. Eine Steuervorrichtung zur Steuerung einer Hubvorrichtung mit zumindest einem Hubelement, insbesondere eine Kraftfahrzeug-Hubvorrichtung, die Steuervorrichtung umfassend:
- eine Steuereinheit (2), und
- eine Kommunikationseinheit (4), wobei
die Kommunikationseinheit (4) dazu eingerichtet ist, Arbeitsdaten der Hubvorrichtung (10) zu empfangen und die Arbeitsdaten zumindest die Traglast L(t) der Hubvorrichtung und/oder die Hubhöhe H(t) der Hubvorrichtung (10) zu einem Zeitpunkt t umfassen, und
die Steuereinheit (2) dazu eingerichtet ist, basierend auf den empfangenen Arbeitsdaten eine Verfahrgeschwindigkeit v(t) des zumindest einen Hubelementes (11) der Hubvorrichtung (10) während eines Absenkens zu ändern.

2. Steuervorrichtung gemäß Anspruch 1, wobei
die Steuereinheit (4) dazu eingerichtet ist, unterschiedliche Arbeitsmodi auszuführen und zumindest ein Arbeitsmodus für das Ausbauen eines Energiespeichers aus einem batterieelektrischen Kraftfahrzeug und ein Arbeitsmodus für das Einbauen eines Energiespeichers aus einem batterieelektrischen Kraftfahrzeug vorgesehen sind.

3. Steuervorrichtung gemäß zumindest einem der voranstehenden Ansprüche, wobei die Steuereinheit (4) in einem Arbeitsmodus für den Ausbau eines Energiespeichers aus einem batterieelektrischen Kraftfahrzeug dazu eingerichtet ist, das von der Hubvorrichtung angehobene Kraftfahrzeug basierend auf periodisch gemessener und empfangener Arbeitsdaten der Hubvorrichtung (10) auf eine Höhe abzusenken, die der Höhe einer Batterieaufnahmeeinrichtung (W) entspricht.

4. Steuervorrichtung gemäß zumindest einem der voranstehenden Ansprüche, wobei die Steuereinheit (4), insbesondere in einem Arbeitsmodus für den Ausbau eines Energiespeichers aus einem batterieelektrischen Kraftfahrzeug, dazu eingerichtet ist, basierend auf den empfangenen Daten zu der Traglast L(t) des zumindest einen Hubelementes (11) die Verfahrgeschwindigkeit v(t) auf null zu setzen, wenn ein Wert L(t) während eines Absenkens sinkt.

5. Steuervorrichtung gemäß zumindest einem der voranstehenden Ansprüche, wobei die Steuereinheit (4), insbesondere in einem Arbeitsmodus für den Ausbau eines Energiespeichers aus einem batterieelektrischen Kraftfahrzeug, dazu eingerichtet ist, basierend auf den empfangenen Daten zu der Traglast L(t) des zumindest einen Hubelementes (11) die Verfahrgeschwindigkeit v(t) auf null zu setzen, wenn ein Wert L(t) während des Absenkens des zumindest einen Hubelementes (11) um einen Referenzwert Lref multipliziert mit einem Sicherheitsfaktor gegenüber einem Ausgangswert oder Vorwert von L(t) kleiner geworden ist.

6. Steuervorrichtung gemäß zumindest einem der voranstehenden Ansprüche, wobei die Steuereinheit (4), insbesondere in einem Arbeitsmodus für den Ausbau eines Energiespeichers aus einem batterieelektrischen Kraftfahrzeug, dazu eingerichtet ist, basierend auf den empfangenen Daten zu der Hubhöhe H(t) des zumindest einen Hubelementes (11) die Verfahrgeschwindigkeit v(t) auf null zu setzen, wenn ein Wert H(t) während eines Absenkens des zumindest einen Hubelementes (11) auf einen Referenzwert Href,Ende abgesunken ist.

7. Steuervorrichtung gemäß zumindest einem der voranstehenden Ansprüche, insbesondere Anspruch 6, wobei
die Steuereinheit (4) , insbesondere in einem Arbeitsmodus für den Ausbau eines Energiespeichers aus einem batterieelektrischen Kraftfahrzeug, dazu eingerichtet ist, basierend auf den empfangenen Daten zu der Hubhöhe H(t) des zumindest einen Hubelementes (11) die Verfahrgeschwindigkeit v(t) gemäß einem vorgespeicherten Geschwindigkeitsprofiles zu verändern, wenn ein Wert H(t) während eines Absenkens des zumindest einen Hubelementes (11) auf einen Referenzwert Href,1 abgesunken ist.

8. Steuervorrichtung gemäß zumindest einem der voranstehenden Ansprüche, wobei die Steuereinheit (4), insbesondere in einem Arbeitsmodus für den Ausbau eines Energiespeichers aus einem batterieelektrischen Kraftfahrzeug, dazu eingerichtet ist, basierend auf den empfangenen Daten zu der Hubhöhe H(t) und der Traglast L(t) des zumindest einen Hubelementes (11) die Verfahrgeschwindigkeit v(t) auf null zu setzen, wenn ein Wert H(t) während eines Absenkens des zumindest einen Hubelementes (11) auf einen Referenzwert Href,Ende abgesunken ist und/oder der Wert L(t) beginnt zu sinken oder um einen Wert Lref multipliziert mit einem Sicherheitsfaktor gegenüber einem Ausgangswert oder Vorwert von L(t) kleiner geworden ist.

9. Steuervorrichtung gemäß zumindest einem der voranstehenden Ansprüche, wobei Referenzwerte für die Traglast Lref und für den Sicherheitsfaktor für verschiedene Fahrzeugmodelle und Fahrzeugvarianten in einem Datenspeicher (3) hinterlegt sind und bevorzugt Lref dem Gewicht eines Energiespeichers eines jeweiligen Fahrzeugmodells oder der jeweiligen Fahrzeugvariante entspricht.

10. Steuervorrichtung gemäß zumindest einem der voranstehenden Ansprüche, wobei Werte für Href,Ende in einem Datenspeicher (3) hinterlegt sind und diese der Höhe verschiedener Modelle von Batterieaufnahmeeinrichtungen (W) entsprechen und Href,1 bevorzugt als Wert Href,Ende mit einem vorgespeicherten Höhensicherheitswert addiert hinterlegt ist.

11. Steuervorrichtung gemäß zumindest einem der voranstehenden Ansprüche, wobei ein Arbeitsmodus der Steuereinheit (4) dazu eingerichtet ist, einen möglichen Federweg einer Kraftfahrzeugfederung zu berücksichtigen und dazu Höhenreferenzwerte Href,1 oder Href,Ende um einen vorbestimmten Federwegwert modifiziert sind.

12. Steuervorrichtung gemäß zumindest einem der voranstehenden Ansprüche, wobei die Steuereinheit (4), insbesondere in einem Arbeitsmodus für den Einbau eines Energiespeichers in ein batterieelektrisches Kraftfahrzeuges, dazu eingerichtet ist, den Höhenreferenzwert Href,1 oder Href,Ende anzufahren.

13. Steuervorrichtung gemäß zumindest einem der voranstehenden Ansprüche, insbesondere Anspruch 12, wobei die Steuereinheit (4), insbesondere in einem Arbeitsmodus für den Einbau eines Energiespeichers, in ein batterieelektrisches Kraftfahrzeug dazu eingerichtet ist, einen temporären Höhenreferenzwert Href,temp anzufahren, wobei der temporäre Höhenreferenzwert Href,temp bei einem zuvor erfolgten Ausbau zwischengespeichert worden ist.

14. Steuervorrichtung gemäß zumindest einem der voranstehenden Ansprüche, wobei die Steuereinheit (4) ein Computerprogrammprodukt ist.

15. Hubvorrichtung mit zumindest einem Hubelement zum Anheben eines Kraftfahrzeuges (F), zumindest eine Erfassungseinheit zum periodischen Erfassen von Arbeitsdaten der Hubvorrichtung (10) und einer Steuervorrichtung (1) gemäß zumindest einem der Ansprüche 1 bis 13.
